Europäisches Patentamt

European Patent Office

Office européen des brevets

(19)

(11) Numéro de publication : **0 113 299**
**B1**

(12)

# FASCICULE DE BREVET EUROPÉEN

(45) Date de publication du fascicule du brevet :
**30.12.86**

(21) Numéro de dépôt : **83420175.8**

(22) Date de dépôt : **21.11.83**

(51) Int. Cl.⁴ : **B 65 D 19/44**, F 17 C 13/08,
B 60 P  3/055, B 60 P  7/12

(54) Dispositif d'arrimage de réservoirs cylindriques dans un cadre de transport, et ceinture utilisable dans un tel dispositif.

(30) Priorité : **22.11.82 FR 8219517**

(43) Date de publication de la demande :
**11.07.84 Bulletin 84/28**

(45) Mention de la délivrance du brevet :
**30.12.86 Bulletin 86/52**

(84) Etats contractants désignés :
**AT BE CH DE GB IT LI NL**

(56) Documents cités :
**FR-A- 2 367 674**
**GB-A- 2 038 268**
**US-A- 1 458 588**
**US-A- 2 024 411**
**US-A- 3 881 694**

(73) Titulaire : **VALLOUREC Société Anonyme dite.**
**7, place du Chancelier Adenauer**
**F-75116 Paris (FR)**

(72) Inventeur : **Bourgain, Jacques**
**38, rue Roger Robert**
**F-59530 Louvignies le Quesnoy (FR)**

(74) Mandataire : **de Passemar, Bernard et al**
**VALLOUREC 7 Place du Chancelier Adenauer**
**F-75016 Paris (FR)**

Jouve, 18, rue St-Denis, 75001 Paris, France

## Description

La présente invention est relative à un dispositif d'arrimage de réservoirs cylindriques, notamment de réservoirs cylindriques de gaz sous pression, dans un cadre de transport, utilisable en particulier pour le transport par voie routière. Dans ce cas le cadre est fixé au châssis d'un véhicule, notamment un semi-remorque, ou fait partie intégrante de ce châssis. Naturellement un tel cadre de transport peut également être utilisé pour le transport maritime et ferroviaire.

De tels cadres de transport comportent, habituellement, une base présentant des berceaux longitudinaux réalisant des empreintes pour les réservoirs de la couche inférieure, et des montants latéraux solidaires de la base et répartis sur la longueur de celle-ci. L'arrimage des réservoirs s'effectue traditionnellement au moyen de ceintures, notamment en fer plat, disposées sur la couche supérieure de réservoirs, sur la largeur de l'empilage entre deux montants et épousant la forme des réservoirs de la couche supérieure, des moyens de serrage étant prévus sur les montants pour exercer un appui en direction de la base de l'empilage sur les ceintures afin d'immobiliser l'empilage de réservoirs dans le cadre. Un cadre de transport de ce type est décrit dans le FR 2 367 674. Dans ce cas les moyens de serrage prévus sur les montants sont constitués de goujons prolongeant les montants et sur lesquels viennent s'enfiler les ceintures disposées sur la couche supérieure de réservoirs. On utilise aussi habituellement comme moyen de serrage de ces ceintures des vis de pression montées sur des bras en déport vers l'intérieur des montants du cadre de transport, les extrémités inférieures des vis étant en appui sur les extrémités des ceintures.

Un dispositif d'arrimage ainsi réalisé présente des inconvénients du fait, d'une part, que les efforts importants auxquels sont soumises les vis de pression provoquent des flexions de celles-ci et du fait, d'autre part, que les différences de hauteur des piles de réservoirs, dues aux tolérances sur les diamètres extérieurs des réservoirs, entraînent des jeux au niveau de l'appui des ceintures sur les réservoirs, ces jeux ne pouvant être rattrapés par les vis de pression, ce qui risque de provoquer des déplacements inacceptables des réservoirs pendant le transport, notamment dans le sens long des réservoirs particulièrement en cas de chocs.

La présente invention se propose de réaliser un dispositif d'arrimage de conception simple et économique, permettant d'éviter les inconvénients des dispositifs antérieurs, et assurant une immobilisation parfaite des réservoirs empilés.

Le dispositif selon l'invention se caractérise par le fait que les moyens de serrage comprennent des cames montées à rotation sur les montants du cadre de transport et susceptibles d'être amenées en appui à force sur lesdites ceintures au voisinage de leurs extrémités, des moyens pour faire tourner lesdites cames par rapport aux montants jusqu'à la position d'appui à force et des moyens pour immobiliser lesdites cames par rapport aux montants dans la position d'appui à force.

De façon avantageuse, les cames sont des galets circulaires montés fous, de façon excentrée, sur des axes solidaires des montants et perpendiculaires à ceux-ci.

Les moyens permettant de faire tourner les cames sont, de préférence, réalisés sous la forme d'une pluralité de trous borgnes répartis sur la surface périphérique de la came, la rotation étant assurée par l'intermédiaire d'une broche de manœuvre susceptible d'être engagée dans un desdits trous borgnes.

Dans un mode particulier de réalisation, la came est montée folle en rotation sur une partie non filetée d'une tige dont une partie filetée est vissée dans un fourreau fixé, notamment par soudure, au montant, ledit fourreau comportant une portée en regard d'une surface frontale de la came, ladite came comportant sur ses surfaces frontales opposées une pluralité d'orifices traversants angulairement répartis et susceptibles de venir en alignement lors de la rotation de la came avec un ou des orifices correspondants dudit fourreau, l'immobilisation de la came en position d'appui à force sur la ceinture étant assurée par passage d'au moins une tige de blocage filetée ou non dans des orifices alignés de la came et du fourreau.

Dans une forme avantageuse de réalisation, on prévoit sur les montants du cadre de support, en dessous des fourreaux, une cornière en forme de U dont les branches, s'étendant du montant vers l'intérieur du cadre de support, constituent des portées de guidage latéral de l'extrémité des ceintures. De préférence les ceintures comportent au voisinage de leurs extrémités des bandes de renfort, en particulier métalliques et fixées notamment par soudure sur la face supérieure des ceintures, lesdites bandes de renfort étant avantageusement munies à leur extrémité d'un talon, également métallique et fixé de préférence par soudure sur la bande de renfort, ledit talon étant susceptible de venir en appui sur la partie supérieure du fond des cornières.

Le dispositif selon l'invention comporte en outre avantageusement, des tirants solidarisant les ceintures et ladite base du cadre, les tirants étant disposés entre les piles de réservoirs.

On comprend qu'avec le dispositif selon l'invention, grâce à l'utilisation de cames, on peut facilement rattraper les jeux en hauteur résultant des tolérances sur les diamètres des réservoirs et l'on ne rencontre par ailleurs plus les problèmes de flexion rencontrés avec des dispositifs à vis de pression.

On peut, de plus, facilement exercer un effort de serrage important sur les ceintures, tout en permettant un démontage facile, étant entendu qu'il suffit pour cela de retirer les tiges de blocage et faire tourner en sens inverse les cames.

Dans le but de mieux faire comprendre l'invention, on va maintenant en décrire, à titre d'exemple en aucune manière limitatif, un mode de réalisation en se référant au dessin annexé dans lequel :

La figure 1 représente un empilage de réservoirs dans un cadre utilisant un dispositif d'arrimage, selon l'invention.

La figure 2 est une vue en coupe agrandie d'un moyen de serrage utilisable dans le dispositif selon l'invention, monté sur un montant du cadre.

La figure 3 est une vue agrandie, sensiblement selon la flèche A de la figure 1 illustrant la manœuvre du moyen de serrage.

La figure 4 est une vue, partiellement en coupe, agrandie d'un moyen de serrage selon un autre mode de réalisation de dispositif selon l'invention, monté sur un montant du cadre.

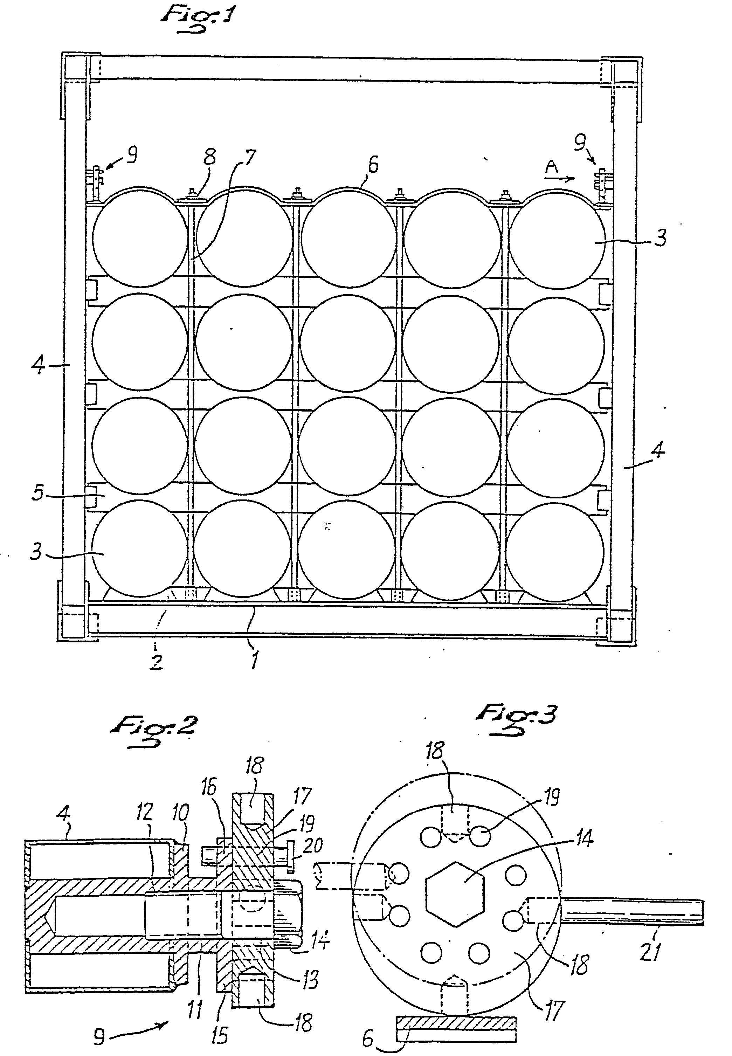

On voit sur la figure 1 un cadre de transport de réservoirs, notamment de gaz sous pression, comportant une base (1) sur laquelle sont disposés des berceaux longitudinaux (2) pour les réservoirs (3) de la couche inférieure. Des montants verticaux (4), réalisés par exemple en tube carré, sont solidaires de la base (1) du cadre et répartis sur la longueur de celui-ci.

Des traverses (5) fixées aux montants (4) séparent les unes des autres les couches de réservoirs empilés.

Sur la couche supérieure de l'empilage sont mises en place des ceintures en fer plat (6) qui, comme on le voit sur la figure 1, épousent la forme de la couche supérieure des réservoirs de l'empilage.

Des tirants (7) sont disposés entre les différentes piles de réservoirs et relient les ceintures (6) à la base (1). Les tirants (7) traversent des orifices prévus à cet effet dans les ceintures (6), et le blocage des ceintures sur les tirants est réalisé au moyen de mécanismes de blocage appropriés (8), permettant entre autres de rattraper les jeux dus aux tolérances notamment des écrous engagés sur des extrémités filetées des tirants avec interposition de rondelles Belleville.

Il est en outre prévu selon l'invention, des moyens de serrage, désignés globalement par (9), solidaires des montants (4) et susceptibles d'exercer un appui en direction de la base de l'empilage sur les extrémités des ceintures (6).

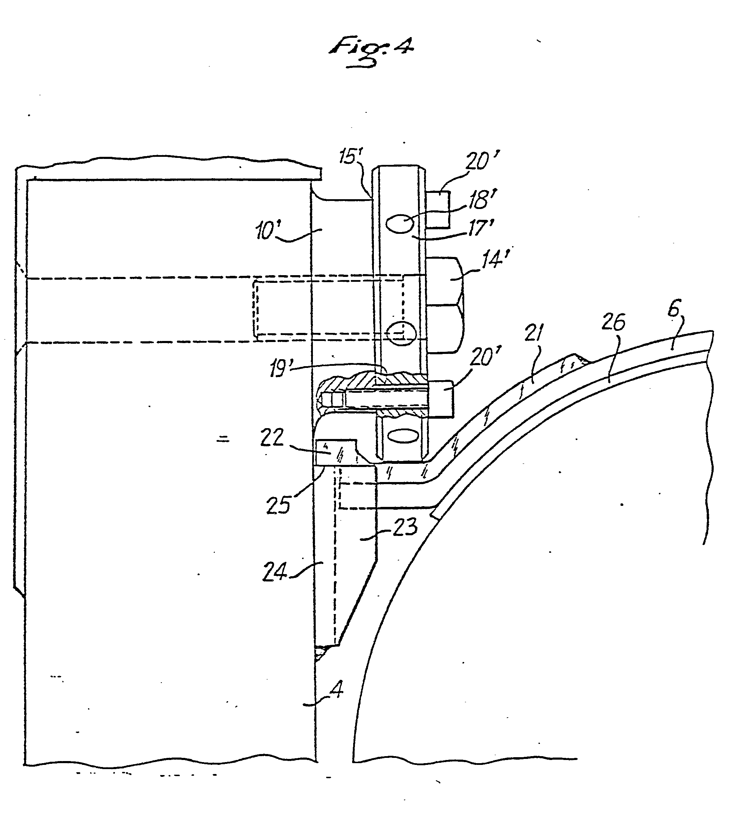

Comme on le voit le mieux sur la figure 2, chaque moyen de serrage comporte un fourreau (10) fixé, notamment par soudure, au montant (4), et comportant un taraudage (11) pour l'engagement vissé d'une tige (12) comportant une partie non filetée (13) et une tête (14). Le fourreau comporte un flasque (15) comportant un ou plusieurs orifices traversants (16).

Sur la partie non filetée (13) de la tige (12) est monté fou en rotation, et de manière excentrée, un galet de forme circulaire (17), comportant dans sa surface périphérique une pluralité de trous borgnes (18), par exemple au nombre de quatre, répartis sur ladite surface périphérique et une pluralité de trous traversants (19) débouchant sur les surfaces frontales du galet (17).

Selon l'invention, le blocage en position d'appui à force du galet (17) formant came sur la ceinture (6), position matérialisée en trait plein sur la figure 3, est assuré au moyen d'une tige de blocage (20) (figure 2) s'engageant dans deux orifices alignés (16) et (19) du flasque (15) et respectivement du galet (17).

Pour amener le galet formant came (17) dans la position de blocage on engage, comme schématisé à la figure 3, une broche de manœuvre (21) dans un trou borgne (18) et l'on procède à la rotation du galet depuis une position à l'écart de la ceinture, schématisée en trait mixte jusqu'à la position d'appui à force, après quoi la broche de manœuvre est retirée. Pour procéder au démontage d'une ceinture il suffit de retirer la ou les tiges de verrouillage (20) faisant office de goupilles, puis de faire tourner le galet (17) en sens inverse à l'aide d'une broche de manœuvre (21).

On se réfère maintenant à la figure 4 qui illustre une variante de réalisation où les éléments semblables comportent les mêmes chiffres de références, le cas échéant munis de l'indice '.

On retrouve dans ce mode de réalisation un fourreau (10') muni d'une portée (15') en regard de laquelle est susceptible de tourner un galet (17') qui dans ce mode de réalisation comporte huit trous borgnes (18') répartis sur sa surface périphérique et une pluralité d'orifices taraudés (19') débouchant sur les surfaces frontales du galet. Dans ce mode de réalisation on utilise pour le blocage du galet des tiges filetées (20') s'engageant dans les orifices taraudés (19') du galet et des orifices en regard du flasque (15'). Il est avantageux d'utiliser deux vis de blocage (20') s'engageant dans des orifices (19') diamétralement opposés sur le galet.

Dans ce mode de réalisation, la ceinture (6) comporte à chacune de ses extrémités une bande de renfort métallique (21), fixée par soudure sur la face supérieure de la ceinture et à l'extrémité de laquelle est fixé, également par soudure, un talon métallique (22). Une cornière (23) en forme de U, comportant un fond (24) est fixée sur chacun des montants (4) en dessous du flasque (15'). Comme on le voit sur la figure 4, en position d'utilisation, le talon (22) vient en appui sur la partie supérieure (25) du fond de la cornière.

De plus, on a représenté dans ce mode de réalisation, une bande (26) en tissu imputrescible interposée entre la ceinture (6) et le réservoir pour éviter le contact métal sur métal.

Bien que l'invention ait été décrite en liaison avec un mode de réalisation particulier, il est bien évident qu'elle n'y est nullement limitée et qu'on peut lui apporter de nombreuses variantes et modifications sans pour autant sortir de son cadre.

**Revendications**

1. Dispositif d'arrimage de réservoirs cylindriques dans un cadre de transport comportant une base et des montants latéraux solidaires de la base et répartis sur la longueur de celle-ci, ledit dispositif comprenant des ceintures, notamment en fer plat, disposées sur la couche supérieure de réservoirs sur la largeur de l'empilage entre deux montants et épousant la forme des réservoirs de la couche supérieure, et des moyens de serrage (19) prévus sur les montants pour exercer un appui sur les ceintures en direction de la base de l'empilage, caractérisé par le fait que les moyens de serrage (9) comprennent des cames (17) montées à rotation sur les montants (4) du cadre de transport et susceptibles d'être amenées en appui à force sur lesdites ceintures (6) au voisinage de leurs extrémités, des moyens (18, 21) pour faire tourner lesdites cames (17) par rapport aux montants jusqu'à la position d'appui à force, et des moyens (16, 19, 20) pour immobiliser lesdites cames par rapport aux montants dans la position d'appui à force.

2. Dispositif selon la revendication 1, caractérisé par le fait que les moyens permettant de faire tourner chacune des cames comportent une pluralité de trous borgnes (18) répartis sur la surface périphérique de la came, la rotation étant assurée par l'intermédiaire d'une broche de manœuvre (21) susceptible d'être engagée dans un desdits trous borgnes.

3. Dispositif selon l'une quelconque des revendications 1 et 2, caractérisé par le fait que lesdites cames sont des galets circulaires (17) montés fous, de façon excentrée, sur des axes (12) solidaires des montants (4) et perpendiculaires à ceux-ci.

4. Dispositif selon l'une quelconque des revendications précédentes, caractérisé par le fait que chacune desdites cames est montée folle en rotation sur une partie non filetée (13) d'une tige (12) dont une partie filetée est vissée dans un fourreau (10) fixé au montant (4), ledit fourreau comportant une portée (15) en regard d'une surface frontale de la came et, ladite came comportant sur ses surfaces frontales opposées une pluralité d'orifices traversants (19), angulairement répartis et susceptibles de venir en alignement lors de la rotation de la came avec un ou des orifices correspondants (16) dudit fourreau, l'immobilisation de la came en position d'appui à force sur la ceinture étant assurée par passage d'au moins une tige de blocage (20) dans des orifices alignés de la came et du fourreau.

5. Dispositif selon la revendication 4, caractérisé par le fait que ledit fourreau est fixé par soudure au montant.

6. Dispositif selon l'une quelconque des revendications précédentes, caractérisé par le fait qu'il comporte, sur les montants, des cornières en forme de U (23) dont les ailes font saillie en direction de l'intérieur du cadre, lesdites cornières étant disposées de manière que l'extrémité correspondante de la ceinture (6) s'engage entre lesdites ailes.

7. Dispositif selon la revendication 6, caractérisé par le fait que les ceintures (6) comportent à chacune de leurs extrémités une bande de renfort (21) munie à son extrémité d'un talon (22) susceptible de venir en appui sur l'extrémité supérieure (25) du fond (24) des cornières (23).

8. Dispositif selon l'une quelconque des revendications précédentes, caractérisé par le fait qu'il comporte en outre, des tirants (7) solidarisant les ceintures (6) et la base (1) du cadre, les tirants étant disposés entre les piles de réservoirs.

## Claims

1. A device for securing cylindrical containers in a transport frame comprising a base and lateral uprights which are integral with the base and are distributed over the length thereof, said device comprising straps, in particular of flat iron, arranged on the top layer of containers over the width of the stack between two uprights and matching the shape of the containers in the top layer, and gripping means (19) provided on the uprights so as to rest on the straps in the direction of the base of the stack, characterised in that the gripping means (9) comprise cams (17) which are rotatably mounted on the uprights (4) of the transport frame and are capable of being brought to rest forcefully on said straps (6) in the vicinity of their ends, means (18, 21) for rotating said cams (17) relative to the uprights to the forceful resting position and means (16, 19, 20) for immobilising said cams relative to the uprights in the forceful resting position.

2. A device according to claim 1, characterised in that the means for rotating each of the cams comprise a plurality of blind holes (18) distributed over the peripheral surface of the cam, rotation being permitted by means of a driving pin (21) capable of being engaged in one of said blind holes.

3. A device according to any one of claims 1 and 2, characterised in that said cams are circular wheels (17) mounted idly in eccentric manner on shafts (12) integral with the uprights (4) and perpendicular to them.

4. A device according to any one of the preceding claims, characterised in that each of said cams is mounted so as to rotate idly on a non-threaded portion (13) of a rod (12) of which a threaded portion is screwed in a sheath (10) fixed to the upright (4), said sheath comprising a bearing (15) opposite a front surface of the cam and said cam comprising on its opposing front surfaces a plurality of transversing orifices (19) which are distributed at angles and are capable of coming into alignment during rotation of the cam with one or more corresponding orifices (16) of said sheath, the cam being immobilised in the forceful resting position on the strap by the passage of at least one locking rod (20) into the aligned orifices of the cam and the sheath.

5. A device according to claim 4, characterised in that said sheath is fixed to the upright by welding.

6. A device according to any one of the preceding claims, characterised in that it comprises, on the uprights, U-shaped angle irons (23) of which the wings project towards the interior of the transport frame, said angle irons being arranged in such a way that the corresponding end of the strap (6) engages between said wings.

7. A device according to claim 6, characterised in that the straps (6) comprise at each of their ends a reinforcing band (21) equipped at its end with a heel (22) capable of resting against the upper end (25) of the base (24) of the angle irons (23).

8. A device according to any one of the preceding claims, characterised in that it also comprises tie-rods (7) which connect the straps (6) and the base (1) of the transport frame, the tie-rods being arranged between the piles of containers.

**Patentansprüche**

1. Vorrichtung zur Befestigung von zylindrischen Behältern in einem Transportgestell mit einer Grundplatte und mit dieser verbundenen seitlichen Streben, die entlang der Grundplatte verteilt sind, wobei die Vorrichtung Bänder, insbesondere aus Flacheisen aufweist, die auf der obersten Schicht der Behälter über die Breite des Stapels zwischen zwei Streben angeordnet sind und die Form der Behälter der obersten Schicht einnehmen und wobei die Vorrichtung Spannorgane (19) aufweist, die auf den Streben vorgesehen sind, um auf die Bänder in Richtung auf die Grundplatte des Stapels einen Druck auszuüben, dadurch gekennzeichnet, daß die Spannorgane (9) Kurvenscheiben (17) aufweisen, die drehbar an den Streben (4) des Transportgestells befestigt sind und mit Kraft auf den Bändern (6) in der Nähe ihrer Enden angedrückt werden können und dadurch, daß die Spannorgane Mittel (18, 21) aufweisen, um die Kurvenscheiben (17) relativ zu den Streben bis zu einer Druckauflagestelle zu verdrehen und Mittel (16, 19, 20), um diese Kurvenscheiben bezüglich der Streben in der Druckauflagestellung festzustellen.

2. Vorrichtung nach Anspruch 1, dadurch gekennzeichnet, daß die Mittel, die die Drehung einer jeden Kurvenscheibe ermöglichen, mehrere Blindbohrungen (18) aufweisen, die auf der peripheren Oberfläche der Kurvenscheibe verteilt sind und wobei die Drehung der Kurvenscheibe mittels eines Steckstifts (21), der in die Blindlöcher eingesteckt werden kann, bewirkt wird.

3. Vorrichtung nach einem der Ansprüche 1 oder 2, dadurch gekennzeichnet, daß die Kurvenscheiben Walzen mit kreisförmigem Querschnitt (17) sind, die auf Achsen (12) exzentrisch und freidrehend angebracht sind, wobei die Achsen an den Streben (4) und senkrecht zu diesen befestigt sind.

4. Vorrichtung nach einem der vorstehenden Ansprüche, dadurch gekennzeichnet, daß jede der Kurvenscheiben frei drehbar auf einem ohne Gewinde (13) versehenen Teil einer Stange (12) befestigt ist, deren mit einem Gewinde versehener Teil in einer Hülse (10) verschraubt ist, die an der Strebe (4) befestigt ist, wobei die Hülse gegenüber einer Stirnseite der Kurvenscheibe eine Fläche (15) aufweist und die Kurvenscheibe auf ihren gegenüberliegenden Stirnseiten mehrere Durchgangsöffnungen (19) aufweist, die winkelmäßig verteilt sind und beim Drehen der Kurvenscheibe mit einer oder den entsprechenden Öffnungen (16) der Hülse ausgerichtet werden können, wobei die Feststellung der Kurvenscheibe in Andruckstellung auf dem Band durch das Passieren mindestens einer Blockierstange (20) in den ausgerichteten Öffnungen der Kurvenscheibe und der Hülse erfolgt.

5. Vorrichtung nach Anspruch 4, dadurch gekennzeichnet, daß die Hülse mittels Verschweißen an der Strebe befestigt ist.

6. Vorrichtung nach einem der vorstehenden Ansprüche, dadurch gekennzeichnet, daß sie auf den Streben U-förmige Profile (23) aufweist, deren Flügel zum Inneren des Gestells hin ausgerichtet sind, wobei die Profile so angeordnet sind, daß die entsprechenden Enden des Bandes (6) zwischen die Flügel eingreifen.

7. Vorrichtung nach Anspruch 6, dadurch gekennzeichnet, daß die Bänder (6) jeweils an ihren Enden ein Verstärkungsbands (21) aufweisen, das an seinem Ende mit einer Stufe (22) versehen ist, die auf dem oberen Ende (25) des Bodens (24) des Profils (23) in Auflage gebracht werden kann.

8. Vorrichtung nach einem der vorstehenden Ansprüche, gekennzeichnet durch, mit den Bändern (6) und der Grundplatte (1) des Gestells verbundenen Zugstangen (7), die zwischen den zylinderförmigen Behältern angeordnet sind.

*Fig.1*

*Fig.2*

*Fig.3*

Fig.4